# EUROPÄISCHE PATENTANMELDUNG

(11) **EP 1 479 463 A1**
(43) Veröffentlichungstag der Anmeldung: **24.11.2004**
(21) Anmeldenummer: 04006033.7
(22) Anmeldetag: 13.03.2004
(51) Int. Cl.: B22D 11/128, F16J 15/34

(54) **Verfahren zur Herstellung einer Gleitringdichtung sowie Gleitringdichtung**

(30) Priorität: 17.05.2003 DE 10322313
(71) Anmelder: Federal-Mogul Friedberg GmbH, 86316 Friedberg (DE)
(72) Erfinder: Goebbels, Franz-Josef, 51399 Burscheid (DE)

(57) **Zusammenfassung**

Verfahren zur Herstellung einer Gleitringdichtung, gebildet durch mindestens einen Gleit (1,18,18')- und/oder Gegenring, der durch Gießen eines Grundkörpers erzeugt wird, wobei der Grundkörper Sollbruchstellen (6) am Umfang (2) aufweist, über welche der Grundkörper nach seiner Erzeugung in mehrere, Trennstellen (7) bildende Einzelteile (1',1"), aufgeteilt wird, wobei bei der Erzeugung des Grundkörpers trennstellenseitig Profilierungen (8,9) an- bzw. eingeformt werden und, dass nach der Aufteilung des Grundkörpers die Einzelteile (1',1") montiert und im Bereich der Profilierungen (8,9) unter Bildung einer lösbaren Verbindung wieder zusammengesetzt werden.

## Beschreibung

Die Erfindung betrifft ein Verfahren zur Herstellung einer Gleitringdichtung, gebildet durch mindestens einen Gleit- und/oder Gegenring, der durch Gießen eines Grundkörpers erzeugt wird, wobei der Grundkörper Sollbruchstellen am Umfang aufweist, über welche der Grundkörper nach seiner Erzeugung in mehrere Trennstellen bildende Einzelteile aufgeteilt wird.
Der CH-A 406 762 ist eine Dichtungsanordnung mit einem Gehäuse zu entnehmen, das eine Dichtungskammer umschließt, durch welche sich eine Welle erstreckt, ferner mit einem Dichtungsring, welcher auf der Welle befestigt ist und eine zur Welle normale Dichtfläche aufweist und mit einem Dichtungsring, welcher am Gehäuse befestigt ist und eine mit der Dichtfläche des ersten Dichtungsringes zusammenwirkende Stirnfläche aufweist. Jeder Dichtungsring ist in Ringsegmente unterteilt, welche mit ihren Endflächen aufeinander anliegen und durch Spannmittel mit ihren Endflächen gegeneinander gedrückt werden.
Die Spannmittel zum Zusammenfügen der Segmente umfassen einen Haltering, welcher jeweils den betreffenden Dichtungsring umschließt und mit einem Flansch versehen ist, welcher bestimmt ist, diese Segmente bei einer axialen Bewegung des Halteringes gegeneinander zu pressen, wobei Mittel zur axialen Bewegung der Halteringe vorhanden sind.

In der EP-B 0 658 714 wird eine Befestigungs- und Zentriervorrichtung für eine geteilte Gleitringdichtung beschrieben, wobei die Gleitringdichtung folgende Elemente umfasst:
Mindestens zwei bogenförmige Stopfbüchsensegmente mit einer Innenseite, die eine Kammer begrenzt und
mindestens zwei bogenförmige Haltesegmente, die konzentrisch um die Welle herum angeordnet und in der Kammer vorgesehen sowie radial nach innen zum Abstand von der Stopfbüchsensegmentinnenseite angeordnet sind.

Die Stopfbüchsensegmente umfassen eine Einrichtung, die eine Öffnung zur Aufnahme eines Zentrierbandes bildet, wobei die Öffnung im wesentlichen durch die Segmente hindurch gebildet ist und sich zu der Kammer hin öffnet, wobei das Zentrierband die Haltesegmente in Umfangsrichtung und gleichförmig von den Stopfbüchsensegmentinnenseiten trennt, wodurch die Welle in der Kammer zentriert wird.

Die im Stand der Technik angeführten geteilten Gleitringdichtungen sind schwierig zu zentrieren, so dass eine Bearbeitung, insbesondere der Gleitfläche nach Aufteilung des Gleit- und/oder Gegenringes in seine Einzelteile nur mit größerem äußeren Aufwand herbeigeführt werden kann. In gleicher Weise ist es verhältnismäßig kompliziert, die Einzelteile des Gleit- und/oder Gegenringes im montierten Zustand gegeneinander zu positionieren.

Der Erfindung liegt die Aufgabe zugrunde, die oben genannten technischen Nachteile zu überwinden und eine Gleitringdichtung bereitzustellen, die nach Aufteilung des Gleit- und/oder Gegenringes in seine Einzelteile einfach montiert und demontiert werden kann.

Diese Aufgabe wird verfahrensgemäß dadurch gelöst, dass bei der Erzeugung des Grundkörpers trennstellenseitig Profilierungen an- bzw. eingeformt werden und, dass nach der Aufteilung des Grundkörpers die Einzelteile montiert und im Bereich der Proflierungen unter Bildung einer lösbaren Verbindung wieder zusammengesetzt werden.

Vorteilhafte Weiterbildungen des Erfindungsgegenstandes sind den zugehörigen verfahrensgemäßen Unteransprüchen zu entnehmen.

Diese Aufgabe wird gegenständlich auch dadurch gelöst, dass der Gleit- und/oder der Gegenring trennstellenseitig im Bereich mindestens einer seiner Flächen über Profilierungen verfügt, über welche eine lösbare Verbindung der Einzelteile herbeiführbar ist.

Vorteilhafte Weiterbildungen der Gleitringdichtung sind den zugehörigen gegenständlichen Unteransprüchen zu entnehmen.

Unter Profilierungen sind hierbei Ansätze sowie Nuten zu verstehen, wobei das jeweilige Halteelement einen dazu passenden Querschnitt aufweist.

Durch die lösbare Verbindung der Einzelteile des Gleit- und/oder Gegenringes kann selbiger, nach Aufteilung in seine Einzelteile, problemlos wieder zusammengesetzt und bedarfsweise einer mechanischen Bearbeitung, beispielsweise eine Drehbearbeitung der Dichtfläche, unterzogen werden. Nach erneuter Aufteilung des Gleit- und/oder Gegenringes zum Zwecke der Montage in problembehafteten Bauteilen kann im Anschluss an die Montage die lösbare Verbindung wieder hergestellt werden, wobei die bedarfsweise erzeugte Bearbeitungsfläche nach Herstellung der Verbindung dem Bearbeitungszustand entspricht.

Unter problembehafteten Bauteilen sind solche Bauteile zu verstehen, die eine Montage eines ungeteilten Gleit- und/oder Gegenringes ausschließen, da der Außendurchmesser, beispielsweise einer Welle, größer ist als der Innendurchmesser des Gleit- und/oder Gegenringes. Somit kann der Gleit- und/oder Gegenring nicht auf die Welle aufgeschoben werden, um in den eigentlichen abzudichtenden Bereich eingebracht zu werden. Erst die Aufteilung eines Gleit- und/oder Gegenringes in mehrere Einzelteile sowie die Erzeugung einer lösbaren Verbindung im Anschluss an die Montage machen eine exakte Positionierung der Gleitringdichtung zur optimalen Abdichtung des jeweiligen Bereiches möglich.

Gegenüber dem Stand der Technik wird somit ein vereinfachtes Herstell- und Montageverfahren für geteilte Gleit- und/oder Gegenringe einer Gleitringdichtung bereitgestellt.

Die Gleitringdichtung wird vorteilhafterweise gebildet durch eine Laufwerkdichtung. Laufwerkdichtungen als spezielle Ausführungen von Gleitringdichtungen kommen dann zum Einsatz, wenn es betriebsbedingt zu starken Verschmutzungen an Aggregaten, Maschinen oder Anlagen kommen kann. Die Abdichtung erfolgt dabei zwischen den Dichtflächen des Gleit- und/oder Gegenringes, respektive weiteren Bauteilen.

Die erfindungsgemäße Gleitringdichtung kann bevorzugt im Bereich von Walzen für die Strangführung einer Stranggießanlage eingesetzt werden. Die Walzen sind hierbei mit Lagern versehen, z.B. Rollen- oder Zylinderlager. Die Lager müssen nicht nur hohe Lasten aufnehmen, sondern unterliegen im Stahlwerk auch einer Umgebung, die mit Dampf, Walzzunder- oder Gießpulver angereichert ist. Darüber hinaus entsteht Korrosion durch Fluorwasserstoffsäure. Außerdem ist die Umgebungstemperatur durch das Gießprodukt sehr stark aufgeheizt. Zum Teil kommen Temperaturen von bis zu 300° C bei Stillstand der Anlage im Bereich der Lager vor. Bis dato kommen in diesen Bereichen radial wirkende Dichtelemente zum Einsatz. Da die Umfangsgeschwindigkeit der Walzen nicht sehr hoch ist, wurde diese Art der Abdichtung bisher als optimal angesehen. Zur Beseitigung des Eintrittes von Schmutz, Dampf oder Flüssigkeiten in den Dichtbereich kommen hier sogenannte automatische Fettzufuhrsysteme zum Einsatz, wobei jedem einzelnen Lager einer Walze über ein Schmiersystem kontinuierlich Fett zugeführt wird. Dadurch, dass das Innere des Gehäuses immer mit Fett gefüllt ist, wird ein Eindringen von Feuchtigkeit in das Gehäuse unterbunden. Bedingt durch die kontinuierliche Fettzufuhr dringt überschüssiges Fett über die Dichtelemente nach außen, wo es sich mit dem Gießpulver und dem Walzzunder zu Klumpen verbinden und sich am Rahmen der Stranggießanlage ablagern kann. Neben den hohen Entsorgungskosten entstehen darüber hinaus hohe Materialkosten für das Fett. Hinzu kommen die hohen Kosten für das Pump- und Leitungssystem des automatischen Fettzufuhrsystems.

Durch Verwendung der erfindungsgemäßen Gleitringdichtung anstelle der bisher zum Einsatz gelangenden radial wirkenden Dichtelemente, ist es absolut ausreichend, den abzudichtenden Raum mit einer einmaligen Fettfüllung zu versehen, so dass eine kontinuierliche Fettzufuhr zu den Lagern damit nicht mehr notwendig ist. Durch die Verwendung einer an sich bekannten Gleitringdichtung, welche bisher nur dort eingesetzt wurde, wo relativ hohe Umfangsgeschwindigkeiten der abzudichtenden Bauteile gegeben sind, zur Abdichtung einer Walze mit nur geringer Umfangsgeschwindigkeit konnte überraschenderweise ein funktionsfähiges und preiswertes Abdichtungssystem geschaffen werden.

Der Erfindungsgegenstand ist anhand eines Ausführungsbeispieles in der Zeichnung dargestellt und wird wie folgt beschrieben. Es zeigen:
- Figur 1: Teilansicht eines Gleitringes einer Laufwerkdichtung;
- Figur 2: Ausschnitt einer bekannten Strangfiihrung mit darin vorgesehenen Walzen;
- Figur 3: Teilansicht einer Walze gemäß Figur 2, ausgerüstet mit einer erfindungsgemäßen Gleitringdichtung;
- Figur 4: Ausführungsbeispiel einer Lagerabdichtung für die Welle gemäß Figur 3.

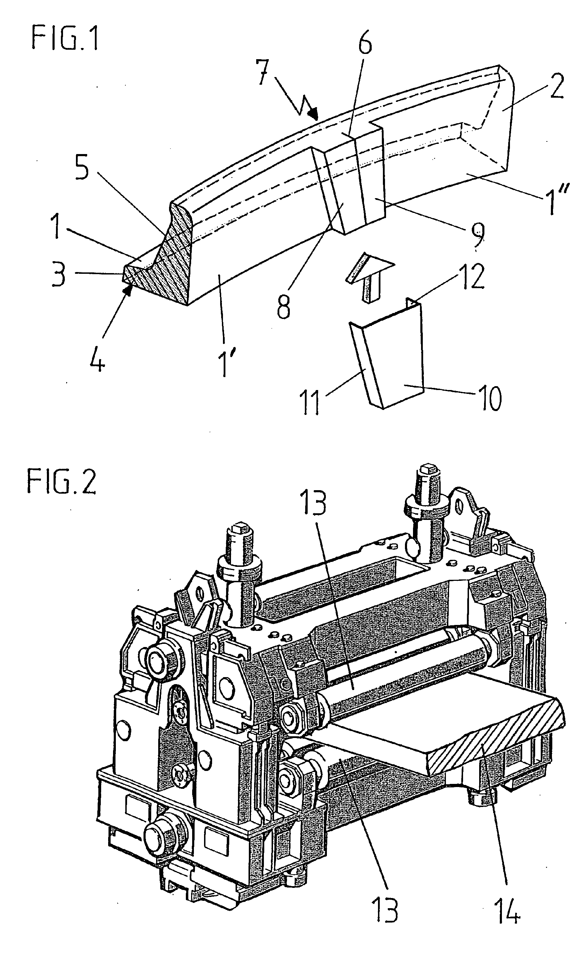

Figur 1 zeigt als perspektivische Teildarstellung einen Gleitring 1 einer nicht weiter dargestellten Laufwerkdichtung. Erkennbar ist die innere Umfangsfläche 2, die äußere Umfangsfläche 3 sowie die Dichtfläche 4. Im, der Dichtfläche 4 abgewandten Bereich 5, kann ein hier nicht dargestellter Dichtkörper angeordnet werden. Der Gleitring 1 ist mit Sollbruchstellen 6 versehen, so dass nach dem Auseinanderbrechen des Gleitringes 1 Einzelteile 1', 1" gebildet werden. Die sich nach dem Auseinanderbrechen des Gleitringes 1 einstellende Trennstelle ist mit dem Bezugszeichen 7 versehen. Trennstellenseitig sind in diesem Beispiel im Bereich der inneren Umfangsfläche 2 Ansätze 8, 9 gießtechnisch angeformt, die aneinanderliegend die Form eines Schwalbenschwanzes aufweisen. Alternativ besteht auch die Möglichkeit, in die innere Umfangsfläche 2 Nuten einzubringen, in welche ein klotzartig ausgebildetes Halteelement eingesetzt werden kann. Eine lösbare Verbindung wird dergestalt herbeigeführt, dass, ein beispielsweise aus Kunststoff bestehendes Halteelement 10, das ebenfalls die Form eines Schwalbenschwanzes aufweist, auf die Ansätze 8, 9 aufgeschoben wird. Um das Halteelement 10 vor Abrutschen oder dergleichen zu bewahren, kann bedarfsweise eine mechanische Verklammerung zwischen den Schenkeln 11, 12 des Halteelementes 10 und den Ansätzen 8, 9 oder der umgebenden Umfangsfläche 2 herbeigeführt werden.

Für Transportzwecke kann die lösbare Verbindung zwischen den Ansätzen 8, 9 und dem Halteelement 10 aufrechterhalten werden. Soll der Gleitring 1 nun in einen Lagerbereich eingebracht werden, dessen Wellenende einen größeren Durchmesser als der Innendurchmesser des Gleitringes 1 aufweist, wird das Halteelement 10 von den Ansätzen 8, 9 abgezogen, so dass die Einzelteile 1', 1" des Gleitringes 1 bedarfsweise unter Einsatz eines Hilfsmittels problemlos im jeweiligen Lagerbereich eingesetzt werden können. Ist selbiges geschehen, kann das Halteelement 10 wieder auf die Ansätze 8, 9 aufgesetzt werden.

Figur 2 zeigt einen Ausschnitt einer Strangführung mit darin eingebrachten Walzen 13. Derartige Walzen 13 sind jeweils zu einem Paar angeordnet und in Transportrichtung der Strangfiihrung einer Stranggießanlage vorgesehen. Gegossener, jedoch noch nicht vollständig abgekühlter endloser Stahl 14 wird zwischen den gegenläufig rotierenden Walzen 13 transportiert.

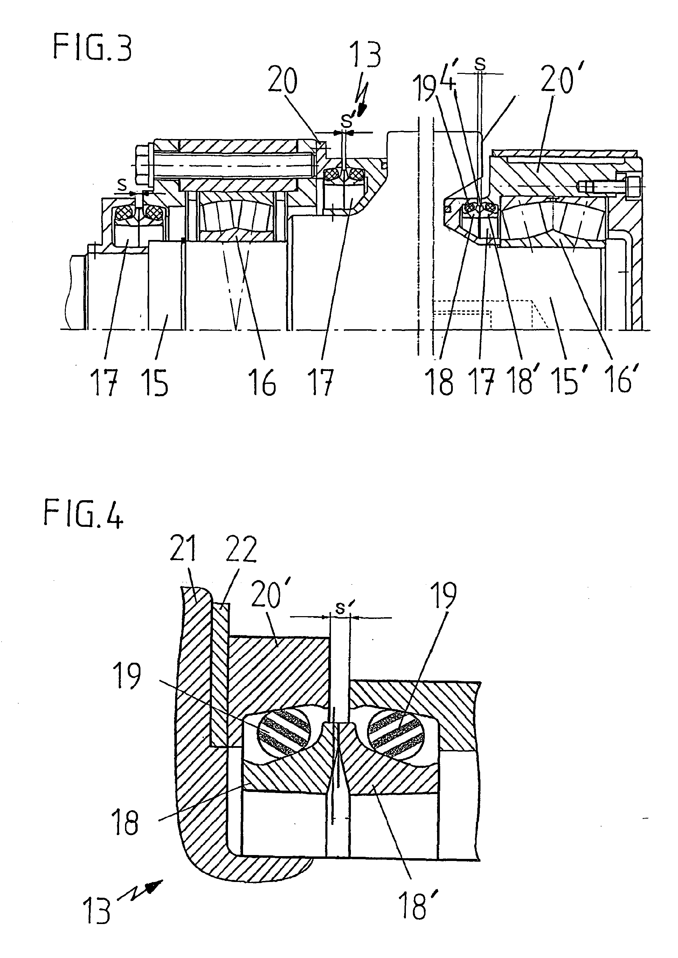

Figur 3 zeigt eine einzelne Walze 13 gemäß Figur 2. Die Walze 13 ist über auf Lagerzapfen 15, 15' befestigte Lager 16, 16' abgestützt. Eine Seite der Walze 13 ist als Festlager 16 und die andere Seite als Loslager 16' ausgebildet. Im Falle einer Wärmeausdehnung beschränkt sich die axiale Längenänderung auf die Seite des Loslagers 16'. Die Lager 16, 16' sind über axial wirkende Gleitringdichtungen 17, jeweils beinhaltend einen rotierenden 18 und einen feststehenden 18' Gleitring, abgedichtet. Über elastische, ringförmig ausgebildete Dichtkörper 19 wird eine axiale Flächenpressung von mindestens 30 N/cm² im Dichtspalt bzw. auf der Dichtfläche 4' erzeugt. Die Gleitringe 18, 18' können in separaten Halteteilen 20, 20' festgelegt sein oder aber die Halteteile können einstückig an der Walze 13 angeformt sein. Durch die axiale Anpresskraft der Dichtkörper 19 wird eine Dichtkraft erzeugt, die dafür sorgt, dass das Eindringen (Einsaugen) von Luft, Wasser oder Dampf verhindert wird. Die Gefahr von Korrosion im Lager 16, 16' ist somit beseitigt und die Funktion des Lagers 16, 16' über einen langen Zeitraum gewährleistet. Im Bereich des Lagers 16, 16' sind die Gleitringe 18, 18' so in ihren Halteteilen 20, 20' angeordnet, dass sich ein Spalt S, S' ergibt, wobei der Spalt S' größer ausgebildet ist als der Spalt S, da auf der Seite des Loslagers 16' die Längenänderung durch Wärmeausdehnung aufgenommen wird. Im Dichtspalt befindet sich eine dünne Fettschicht des im Lager 16, 16' vorhandenen Fettes (nicht dargestellt). Da bei Längenänderungen der Walze 13 keine Schmutzteilchen in den abzudichtenden Raum befördert werden und die Dichtheit des Systems trotz sich einstellenden Unterdruckes im abzudichtenden Raum gewährleistet ist, kann auf ein kostenträchtiges Fettzufiihrsystem verzichtet werden. Da auch kein überschüssiges Fett abgeführt werden muss, entstehen keine Kosten für die teure Abfallbeseitigung.

Figur 4 zeigt eine alternative Ausgestaltung der Walze 13 im Bereich des Loslagers 16'. Zwischen dem Halteteil 20' und der Stirnfläche 21 der Walze 13 ist ein Hitzeschild 22 vorgesehen. Auf diese Weise wird der Wärmefluss von der Walze 13 zu den Gleitringen 18, 18' unterbunden und somit einer Temperaturerhöhung entgegengewirkt.

## Patentansprüche

1. Verfahren zur Herstellung einer Gleitringdichtung, gebildet durch mindestens einen Gleit- (1, 18, 18') und/oder Gegenring, der durch Gießen eines Grundkörpers erzeugt wird, wobei der Grundkörper Sollbruchstellen (6) am Umfang (2) aufweist, über welche der Grundkörper nach seiner Erzeugung in mehrere, Trennstellen (7) bildende Einzelteile (1', 1"), aufgeteilt wird, **dadurch gekennzeichnet, dass** bei der Erzeugung des Grundkörpers trennstellenseitig Profilierungen (8, 9) an- bzw. eingeformt werden und, dass nach der Aufteilung des Grundkörpers die Einzelteile (1', 1") montiert und im Bereich der Profilierungen (8, 9) unter Bildung einer lösbaren Verbindung wieder zusammengesetzt werden.

2. Verfahren nach Anspruch 1, **dadurch gekennzeichnet, dass** die Einzelteile (1', 1") bedarfsweise unter Einsatz von Hilfsmitteln vor Ort in den jeweiligen abzudichtenden Bereich (16, 16') eingebracht werden, wobei im Anschluss an die Montage die lösbare Verbindung der Einzelteile (1', 1") wieder hergestellt und das bedarfsweise eingesetzte Hilfsmittel entfernt wird.

3. Verfahren nach Anspruch 1 oder 2, **dadurch gekennzeichnet, dass** die lösbare Verbindung der Einzelteile (1', 1") durch mechanische Verklammerung der Profilierungen (8, 9) erzeugt wird.

4. Verfahren nach einem der Ansprüche 1 bis 3, **dadurch gekennzeichnet, dass** die mechanische Verklammerung durch Aufschieben eines Halteelementes (10) auf die Profilierungen (8, 9) dergestalt erzeugt wird, dass das Halteelement (10) in seiner Endposition gegenüber den Profilierungen (8, 9) bzw. der umgebenden Fläche fixiert wird.

5. Verfahren nach einem der Ansprüche 1 bis 4, **dadurch gekennzeichnet, dass** Profilierungen (8,9) in Form von radial vorstehenden Ansätzen an der inneren Umfangsfläche (2) des Grundkörpers angeformt werden.

6. Verfahren nach einem der Ansprüche 1 bis 4, **dadurch gekennzeichnet, dass** Profilierungen in Form von radialen Vertiefungen an der inneren Umfangsfläche (2) des Grundkörpers eingeformt werden.

7. Gleitringdichtung, gebildet durch mindestens einen Gleit- (1, 18, 18') und/oder Gegenring, der außerhalb seiner Dichtfläche (4, 4') mit einem elastischen Dichtkörper (19) in Wirkverbindung bringbar ist, wobei der Gleit- (1, 18, 18') und/oder der Gegenring aus mehreren, Trennstellen (17) bildenden, Einzelteilen (1', 1") besteht, **dadurch gekennzeichnet, dass** der Gleit- (1, 18, 18') und/oder der Gegenring trennstellenseitig im Bereich mindestens einer seiner Flächen (2) über Profilierungen (8, 9) verfügt, über welche eine lösbare Verbindung der Einzelteile (1', 1") herbeiführbar ist.

8. Gleitringdichtung nach Anspruch 7, **dadurch gekennzeichnet, dass** die lösbare Verbindung über ein Halteelement (10) herbeiführbar ist.

9. Gleitringdichtung nach Anspruch 7 oder 8, **dadurch gekennzeichnet, dass** die Profilierungen (8, 9) im Bereich einer der Umfangsflächen (2, 3) des Gleit- (1, 18, 18') und/oder Gegenringes vorgesehen sind.

10. Gleitringdichtung nach einem der Ansprüche 7 bis 9, **dadurch gekennzeichnet, dass** die als Ansätze (8, 9) ausgebildeten Profilierungen im Bereich der inneren Umfangsfläche (2) des Gleit- (1, 18, 18') und/oder Gegenringes angeordnet sind.

11. Gleitringdichtung nach einem der Ansprüche 7 bis 10, **dadurch gekennzeichnet, dass** die Ansätze (8, 9) nach Art eines Schwalbenschwanzes ausgebildet sind und dass das Halteelement (10) eine entsprechende Form aufweist, wobei das Halteelement (10) nach dem Aufschieben auf die Ansätze (8, 9) gegenüber selbigen bzw. der umgebenden Fläche (2) in verriegelnder Weise festlegbar ist.

12. Gleitringdichtung nach einem der Ansprüche 7 bis 11, **dadurch gekennzeichnet, dass** die Gleitringdichtung eine Laufwerkdichtung ist.

13. Gleitringdichtung nach einem der Ansprüche 7 bis 12, einsetzbar in hohen Umgebungstemperaturen und geringen Umlaufgeschwindigkeiten ausgesetzten Bauteilen.

14. Gleitringdichtung nach Anspruch 13, einsetzbar im Bereich von Walzen (13) für die Strangführung einer Stranggießanlage.
